# EUROPEAN PATENT SPECIFICATION

(11) **EP 2 296 241 B1**
(45) Date of publication and mention of the grant of the patent: **21.08.2013**
(21) Application number: 09170080.7
(22) Date of filing: 11.09.2009
(51) Int. Cl.: H02G 3/06, H02G 15/06

(54) **Connector housing**
Steckverbindergehäuse
Boîtier de connecteur

(43) Date of publication of application: 16.03.2011
(73) Proprietor: Helianthos B.V., 6827 AV Arnhem (NL)
(72) Inventor: Welschen, Johannes Martinus Maria, 5627 HG Eindhoven (NL); Vereijken, Johannes Martinus Petrus, 5712 NT Someren-Eind (NL); Van Geel, Antonius Hendrika Henricus Maria, 5282 SB Boxtel (NL); Dubbeldam, Gerrit Cornelis, 6904 PH Zevenaar (NL); Walda, Tjeerd, 6824 MS Arnhem (NL)
(74) Representative: Zonneveld, Hendrik Jan

(56) References cited:
- DE-A1- 3 512 578
- DE-U1- 29 722 267
- US-A- 4 386 817
- US-A- 5 773 758
- US-A1- 2002 127 905

## Description

The invention relates to a connector housing comprising a cable strain relief, e.g., for a junction box connecting an electro-conductive cable to a flat conductive lead, e.g., a conductive layer in a sheet, such as a solar cell or photovoltaic foil.

US 4,789,759 discloses a connector assembly for an electrical cable providing strain relief for use with a junction box mounted on a photovoltaic module. The assembly is relatively bulky and requires considerable force to be assembled by wrenching. The end of the electrical cable needs to be stripped with high accuracy, since the end of the insulating sheath must abut the housing. The stripped cable end is in direct contact with the housing, which introduces a safety risk.

The object of the invention is to provide a compact and safe connector housing assembly with an effective cable strain relief system that can be manufactured in an economic way.

The object of the invention is achieved with a connector housing for connecting an electric cable to a conductive lead, the connector housing comprising:
- a cable passage provided with an interior stop;
- a clamp ring fitting within the cable passage, the clamp ring being slideable over the cable and comprising a ring portion and one or more flexible tines extending from the ring portion in axial direction;
- a locking ring provided with one or more fastening elements for engaging corresponding fastening elements in the cable passage to lock the locking ring in a locking position wherein the tines of the clamp ring are provided with an outwardly beveled pressure surface, the ring portion of the clamp ring abutting the interior stop in the cable passage, and wherein the locking ring has one circumferential edge with an inwardly beveled pressure surface abutting the beveled pressure surface of the tines, wherein the beveled, pressure surface of the locking ring presses the beveled ends of the clamp ring tines radially inwardly when the locking ring is in the locking position.

The fastening elements of the locking ring and the corresponding fastening elements of the cable passage can for example form a snap-in connection. For example, the fastening elements of the locking ring may comprise one or more snap-in teeth or latches for cooperation with corresponding notches in the housing. These snap-fit latches of the locking ring can for example extend over the full periphery of the locking ring. This way, the locking ring does not need to be positioned carefully and can be snapped into the cable inlet opening regardless of its orientation relative to the corresponding snap-fit elements in the cable inlet opening, which can for example be two or more opposite inwardly projecting cams. The same advantage is achieved if the snap-fit elements in the cable inlet opening extend over its full periphery. In that case, the locking ring needs to have only two or three corresponding snap-fit elements.

To prevent that torque loads are passed from the cable to the connection with the foil, the clamp ring can be provided with a non-circular cross sectional circumference, while the interior of the cable passage is correspondingly shaped. The non-circular cross sectional circumference can for instance be polygonal, e.g., hexagonal.

The stop in the cable passage can for example at least partly formed by a shoulder edge narrowing the cable passage. Alternatively, or additionally, the stop in the cable passage can at least partly be formed by a sealing ring resting against an edge narrowing the cable passage. The sealing ring can for example be made of a compressible material, e.g., an elastomeric material. The use of such a sealing ring lessens the need for an accurately stripped cable sheath end. Optionally, the sealing ring and the clamp ring can be embodied in a single piece, e.g., by 2K injection moulding.

Optionally, the locking ring may comprise a flanged end of larger diameter than the cable passage. The flanged end abuts the circumferential edge of the cable inlet opening of the cable passage.

In a specific embodiment, the connector housing may comprise a first housing part and a second housing part, both having a flat contact face wherein at least one of the two housing parts is provided with one or more protrusions having one end attached to the other housing part to provide a retention force drawing the contact faces of the two housing parts together. Such an embodiment is particularly useful for connecting a cable to a foil, such as a photovoltaic foil, which is clamped between the two housing parts by the retention force. The protrusions can pass the foil via openings in the foil. In such an embodiment, one or both of the two contact faces can at least partly be provided with a double sided adhesive tape forming a watertight seal and a robust attachment. The housing parts and the protrusions can be made of a plastic material enabling the protrusions to be attached to the other housing part by a weld joint, e.g. by ultrasonic welding. This embodiment, particularly the use of the adhesive tapes and/or the weldable protrusions providing the retention force, can also be used without the cable strain relief system described above.

In an alternative embodiment, the connector housing can have only a single housing part with an open side attached to the foil, e.g., by an adhesive or an adhesive tape.

The connector housing according to the present invention is particularly suitable for use as a junction box for a photovoltaic module. Such a photovoltaic module may for example comprise a flexible foil substrate provided with photovoltaicly active thin film layers to form a photovoltaic foil. The junction box can for example encase one or more electroconductive connectors connecting the cable to a conductive lead in the photovoltaic foil. Such a connector can for example be an electroconductive S-shaped or swanneck connector comprising a first end with a cable connection and a second end with a connection to the conductive lead in the photovoltaic foil. Due to the swanneck configuration, the connected cable end and the foil can be parallel to each other. Moreover, the resilient swanneck configuration prevents that tensile loads on the cable are fully passed to the foil connection. The second end of the swanneck connector can for instance be a foil crimp connection or a connection with a conductive adhesive or the like. The first end can for example comprise a cable crimp connection with a first crimp section crimped around an isolation sheath of the cable and a second crimp section to be crimped around a stripped end of the cable, wherein the first and second crimp sections are connected by a neck bridging the difference in diameter. Such a swanneck connector can also be used with different types of junction boxes, e.g., with a different cable strain relief system or even without strain relief system.

The housing parts, the locking and/or the clamp ring can for instance be made of a thermoplastic material.

The invention will be further explained with reference to the accompanying drawings, in which:
- Figure 1:: shows a junction box with a connector housing according to the present invention;
- Figure 2:: shows the junction box of Figure 1 in cross section;
- Figure 3:: shows the various parts of the junction box of Figure 1 in exploded view;
- Figure 4:: shows the connector element of the junction box of Figure 1.

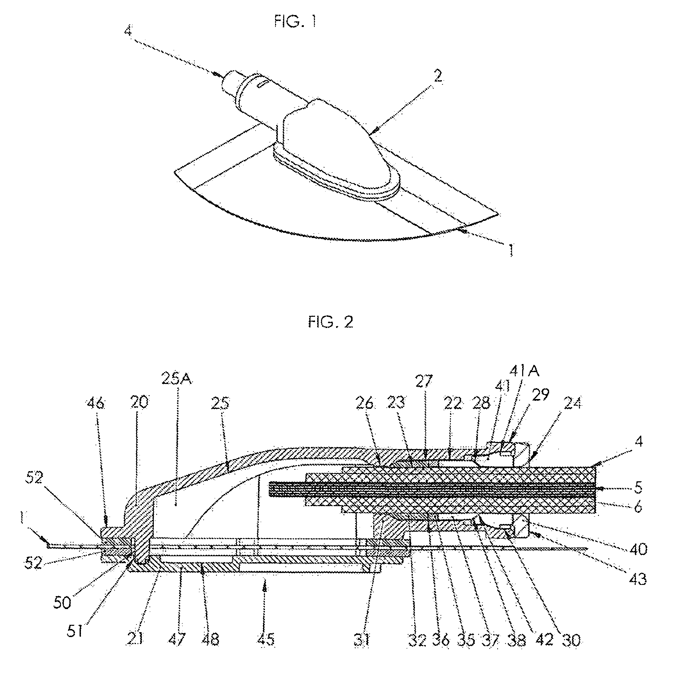

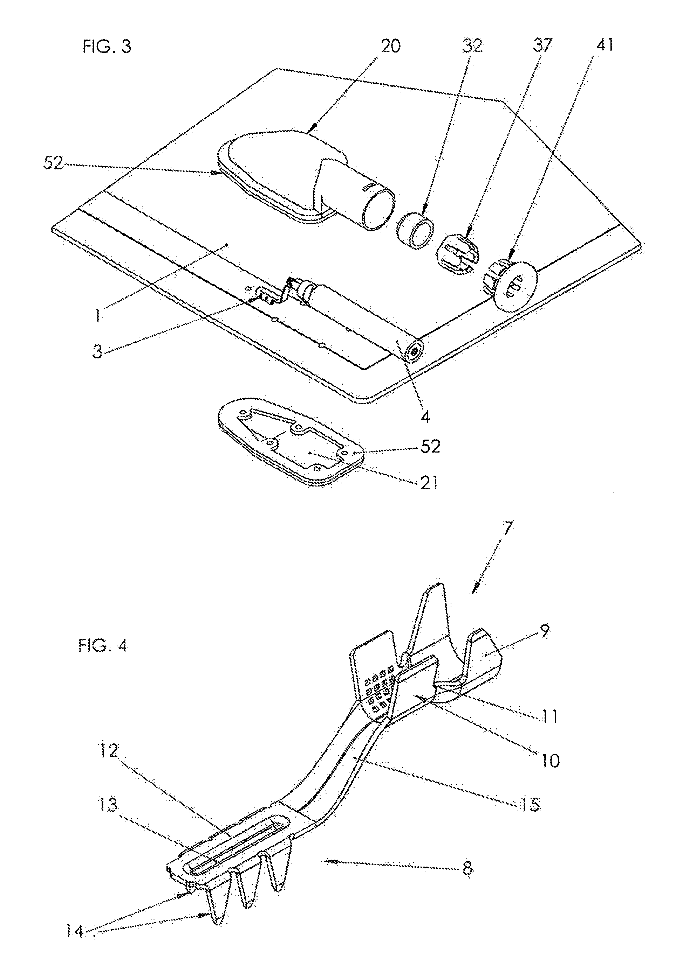

Figure 1 shows a photovoltaic foil 1 provided with a junction box 2, shown in cross section in Figure 2 and in exploded view in Figure 3. The junction box 2 encases a conductive connector 3 (see Figure 3) connecting an electrical cable 4 to a conductive lead in the photovoltaic foil 1. The cable 4 comprises a conductive core 5 insulated by a double sheath 6 of a plastic material. The photovoltaic foil 1 translates incident solar energy into electricity discharged via the cable 4.

The conductive connector 3 is shown in more detail in Figure 4. The connector 3 has the shape of a swanneck and comprises a first end 7 with a double cable crimp connection for connection to the cable 4, and a second end 8 with a flat cable crimp connection. The double cable crimp connection comprises a first crimp section 9 to be crimped around the inner isolation sheath of the cable 4, and a second crimp section 10 to be crimped around the conductive core 5 of the cable 4. The first and second crimp sections are bridged by a neck 11 to overcome the difference in diameter. The flat cable crimp connection at the second end 8 comprises a strip 12 with a bulging center 13 escorted by two rows of three bendable tines 14 piercing through the foil 1 and folded back onto the foil 1 to clamp the foil 1 between the tines 14 and the bulging part 13. The first end 7 with the double cable crimp connection and the second end 8 with the flat cable crimp connection are bridged by a sloping strip 15. The first and ends 7, 8 and the bridging strip 15 all form a single integral connector 3 of an electro-conductive material.

The photovoltaic foil 1 is clamped between two parts of the connector housing, both made of a plastic material: a first housing part 20 with the cable passage receiving the cable and a substantially flat second housing part 21.

The first housing part 20 comprises a cylindrical wall or bush 22 defining a cable passage 23 leading from an open cable inlet 24 to a cap 25 encasing the connector element 3. Two guiding vanes 25a serve to guide the cable during assembling when the cable is passed through the cable passage 23 and the cap 25 to be connected to the foil.

The cable passage 23 comprises a first section 26 which opens into the interior space of the cap 25 and has an inner diameter corresponding to the outer diameter of the cable 4 to provide a tight fit. Adjacent the first section 26 is a second section 27 of a larger diameter. Between the first and second section, the diameter of the cable passage gradually changes. At the end of the second section 27, the cable passage 23 comprises a third section 28 of a diameter which is larger than the diameter of the second section 27. At the end of the third section 28, the diameter gradually increases to the wider diameter of a fourth section 29 forming the open cable inlet end 24 of the cable passage. The fourth section 29 also has an increased outer diameter forming a flange which can be used to engage an assembly tool when the locking ring is put in place. The fourth section 29 comprises two opposite inwardly projecting cams 30 in the open cable inlet end 24 of the cable passage 23.

The narrow first section 26 of the cable passage 23 forms a shoulder 31. A sealing ring 32 of a compressible plastic material rests against this shoulder edge 31.

A clamp ring 35 fits within the second section 27 of the cable passage 23 and partly extends into the third section 28. The clamp ring 35 abuts the sealing ring 32. The clamp ring 35 is slideable over the cable 4 and comprises a ring portion 36 and a plurality of flexible tines 37 extending from the ring portion 36 in axial direction. The tines 37 of the clamp ring 35 are of equal length and are provided with an outwardly beveled pressure surface 38.

The clamp ring 35 is locked between the sealing ring 32 and a locking ring 40, which extends from the clamp ring 35 to the cable inlet end 24 of the cable passage 23. The locking ring 40 is provided with a number of resilient latches 41, each comprising an outwardly projecting cam 41A. The cams 41A of the latches 41 contacting the cams 30 in the cable inlet 24 snap behind the cams 30 to form a snap-in connection which locks the locking ring 40 in its position. Since all latches 41 of the locking ring 40 are provided with cams 41A, the locking ring 40 does not need to be positioned carefully but is locked regardless of its orientation relative to the cams 30 in the cable inlet end 24. At its side facing the clamp ring 35, the locking ring 40 has a circumferential edge with an inwardly beveled pressure surface 42. This beveled pressure surface 42 presses on the beveled pressure surface 38 of the tines 37 of the clamp ring 35 and pushes these tines 37 radially inwardly to grip and clamp the cable 4 and hold it in place.

The locking ring 40 comprises a flanged end 43 of larger diameter than the interior diameter of the cable passage 23. The flanged end 40 is flush with the outer diameter of the fourth section 29 of the cable passage 23.

The clamp ring 35 has a non-circular hexagonal cross sectional circumference. The interior of the second section 27 of the cable passage 23 is correspondingly shaped. This way, it is prevented that torque loads on the cable are passed to the connector element 13 and to the foil 1.

The cap 25 of the first housing part 20 has one open side 45 clamping onto the photovoltaic foil 1. The first and second housing parts 20, 21 both have a flat contact face. The contact face of the first housing part 20 is formed by the edge 46 of the cap 25 surrounding the open side 45.

The second housing part 21 is formed by a flat base 47 with a sunk part 48 for accommodating the folded tines 14 of the flat cable crimp connection 8. The flat base 47 forms the flat contact face of the second housing part 21 and its outline mirrors the edge 46 surrounding the open side 45 of the first housing part 20.

The first housing part 20 is provided with a plurality of protrusions 50 protruding from the edge 46 of the open side 45 of the cap 25 through openings in the photovoltaic foil 1.

The second housing part 21 is provided with structures 51 for receiving the outer end of the protrusions 50 of the first housing part 20 for providing a weld, for instance an ultrasonic weld.

The contact faces of the first and second housing parts 20, 21 are both covered with a double sided adhesive tape 52 along their entire perimeter. The protrusions 50 are fit into the structures 51 in the second housing part 21. In this position the protrusions 50 are joined to the second housing part 21 by ultrasonic welding. During welding the first and second housing parts 20, 21 are pressed onto each other to create a pro-tension after the welding joint is made. This way, the protrusions 50 apply a retention force drawing the two housing parts 20, 21 onto each other to tightly clamp the photovoltaic foil 1. The adhesive tapes 52 are compressed to tightly seal the interior of the junction box 2.

## Claims

1. Connector housing (2) for connecting an electric cable (4) to a conductive lead, the connector housing comprising:
- a cable passage (23) provided with an interior stop (32);
- a clamp ring (35) fitting within the cable passage, the clamp ring being slideable over the cable and comprising a ring portion (36) and one or more flexible tines (37) extending from the ring portion in axial direction;
- a locking ring (40) provided with one or more fastening elements (41) for engaging corresponding fastening elements (30) in the cable passage to lock the locking ring in a locking position wherein the tines of the clamp ring are provided with an outwardly beveled pressure surface (38), the ring portion of the clamp ring abutting the interior stop in the cable passage, and wherein the looking ring (40) has one circumferential edge with an inwardly beveled pressure surface (42) abutting the beveled pressure surface of the tines, wherein the beveled pressure surface of the locking ring presses the beveled ends of the clamp ring tines (37) radially inwardly when the locking ring (40) is in the locking position.

2. Connector housing according to claim 1 wherein the fastening elements (41) of the locking ring (40) and the corresponding fastening elements (30) of the cable passage (23) form a snap-in connection.

3. Connector housing according to claim 2 wherein the fastening elements (41) of the locking ring comprise one or more resilient snap-in latches for cooperation with corresponding snap-fit elements in the housing.

4. Connector housing according to claim 3 wherein the snap-fit latches (41) of the locking ring and/or the corresponding snap-fit elements (30) in the housing extend over the full periphery of the locking ring (40) or cable inlet (23) respectively.

5. Connector housing according to anyone of the preceding claims wherein the clamp ring (35) has a non-circular cross sectional circumference, and the interior of the cable passage (23) is correspondingly shaped.

6. Connector housing according to claim 5 wherein the non-circular cross sectional circumference is polygonal, e.g., hexagonal.

7. Connector housing according to any one of the preceding claims wherein the stop in the cable passage is at least partly formed by a shoulder edge narrowing the cable passage.

8. Connector housing according to any one of the preceding claims wherein the stop in the cable passage (23) is at least partly formed by sealing ring (32) resting against an edge narrowing the cable passage (23).

9. Connector housing according to any one of the preceding claims wherein the connector comprises a first housing part (20) and a second housing part (21), both having a flat contact face wherein at least one of the two housing parts is provided with one or more protrusions (50) having one end attached to the other housing part to provide a retention force drawing the contact faces of the two housing parts together.

10. Connector housing according to claim 9 wherein at least one of the two contact faces is at least partly provided with a double sided adhesive tape (52).

11. Connector housing according to claim 9 or 10 wherein the housing parts (20, 21)and the protrusions (52) are made of a plastic material and wherein the protrusions are attached to the other housing part by a weld joint.

12. Photovoltaic module (1) provided with a junction box (2) comprising a connector housing according to any one of the preceding claims.

13. Photovoltaic module according to claim 12 wherein the connector housing houses an electroconductive swanneck connector (3) comprising a first end (7) with a cable connection and a second end (8) with a connection to the conductive lead in the photovoltaic foil.

14. Photovoltaic module according to claim 13 wherein the second end (8) of the swanneck connector (3) is a foil crimp connection or a connection with a conductive adhesive.

15. Photovoltaic module according to claim 13 or 14 wherein the first end (7) comprises a cable crimp connection with a first crimp section (9) crimped around an isolation sheath of the cable (4) and a second crimp section (10) to be crimped around a stripped end of cable, wherein the first and second crimp sections are connected by a neck bridging the difference in diameter.

## Patentansprüche

1. Steckverbindergehäuse (2) zum Verbinden eines elektrischen Kabels (2) mit einer leitfähigen Zuleitung, wobei das Steckverbindergehäuse aufweist:
- eine mit einem inneren Anschlag (32) versehene Kabeldurchführung (23);
- einen in der Kabeldurchführung eingepassten, über das Kabel gleitbaren Klemmring (35), der einen Ringabschnitt (36) und eine oder mehrere elastische Zacken (37), die sich von dem Ringabschnitt aus in axiale Richtung erstrecken, aufweist;
- einen Verriegelungsring (40) mit einem oder mehreren Befestigungselementen (41) für einen Eingriff in entsprechende Befestigungselemente (30) in der Kabeldurchführung, um den Verriegelungsring in einer Verriegelungsposition zu verriegeln, wobei die Zacken des Klemmrings mit einer auswärts abgeschrägten Druckfläche (38) versehen sind, der Ringabschnitt des Klemmrings am inneren Anschlag in der Kabeldurchführung anliegt, und wobei der Verriegelungsring (40) eine Umfangskante mit einer einwärts abgeschrägten Druckfläche (42) aufweist, die an der abgeschrägten Druckfläche der Zacken anliegt, wobei die abgeschrägte Druckfläche des Verriegelungsrings die abgeschrägten Enden der Klemmringzacken (37) radial einwärts presst, wenn der Verriegelungsring (40) in der Verriegelungsposition ist.

2. Steckverbindergehäuse nach Anspruch 1, wobei die Befestigungselemente (41) des Verriegelungsrings (40) und die entsprechenden Befestigungselemente (30) der Kabeldurchführung (23) eine Schnappverbindung bilden.

3. Steckverbindergehäuse nach Anspruch 2, wobei die Befestigungselemente (41) des Verriegelungsrings eine oder mehrere elastische Schnappriegel aufweisen, die mit entsprechenden Schnappelementen in dem Gehäuse zusammenwirken.

4. Steckverbindergehäuse nach Anspruch 3, wobei die Schnappriegel (41) des Verriegelungsrings und/oder die entsprechenden Schnappelemente (30) in dem Gehäuse sich über den gesamten Umfang des Verriegelungsrings (40) bzw. des Kabeleinlasses (23) erstrecken.

5. Steckverbindergehäuse nach einem der vorstehenden Ansprüche, wobei der Klemmring (35) einen nichtkreisförmigen Querschnittumfang aufweist und das Innere der Kabeldurchführung (23) entsprechend gestaltet ist.

6. Steckverbindergehäuse nach Anspruch 5, wobei der nichtkreisförmige Querschnittumfang polygonal, z.B. hexagonal, ist.

7. Steckverbindergehäuse nach einem der vorstehenden Ansprüche, wobei der Anschlag in der Kabeldurchführung mindestens teilweise von einer Schulterkante gebildet wird, die die Kabeldurchführung verschmälert.

8. Steckverbindergehäuse nach einem der vorstehenden Ansprüche, wobei der Anschlag in der Kabeldurchführung (23) mindestens teilweise von einem Dichtungsring (32) gebildet wird, der an einer Kante anliegt, die die Kabeldurchführung (23) verschmälert.

9. Steckverbindergehäuse nach einem der vorstehenden Ansprüche, wobei der Steckverbinder einen ersten Gehäuseteil (20) und einen zweiten Gehäuseteil (21) aufweist, die beide eine ebene Kontaktfläche haben, wobei mindestens einer der beiden Gehäuseteile mit einem oder mehreren Vorsprüngen (50) versehen ist, die mit einem Ende an dem anderen Gehäuseteil angebracht sind, um eine Haltekraft bereitzustellen, die die Kontaktflächen der zwei Gehäuseteile zueinander hin zieht.

10. Steckverbindergehäuse nach Anspruch 9, wobei mindestens eine der zwei Kontaktflächen mindestens teilweise mit einem doppelseitigen Klebeband (52) versehen ist.

11. Steckverbindergehäuse nach Anspruch 9 oder 10, wobei die Gehäuseteile (20,21) und die Vorsprünge (52) aus einem Kunststoffmaterial hergestellt sind und wobei die Vorsprünge mittels einer Schweißverbindung an dem anderen Gehäuseteil angebracht sind.

12. Photovoltaik-Modul (1) mit einem Anschlusskasten (2), der ein Steckverbindergehäuse nach einem der vorstehenden Ansprüche aufweist.

13. Photovoltaik-Modul nach Anspruch 12, wobei in dem Steckverbindergehäuse ein elektrisch leitfähiger Schwanenhals-Steckverbinder (3) untergebracht ist, der ein erstes Ende (7) mit einer Kabelverbindung und ein zweites Ende (8) mit einer Verbindung mit der leitfähigen Zuleitung in der photovoltaischen Folie aufweist.

14. Photovoltaik-Modul nach Anspruch 13, wobei das zweite Ende (8) des Schwanenhals-Steckverbinders (3) eine Folien-Crimpverbindung oder eine Verbindung mit einem leitfähigen Klebstoff ist.

15. Photovoltaik-Modul nach Anspruch 13 oder 14, wobei das erste Ende (7) eine Kabelcrimpverbindung mit einem ersten Crimpabschnitt (9), der um eine Isolationshülle des Kabels (4) gecrimpt ist, und einen zweiten Crimpabschnitt (10) aufweist, der um ein abgestreiftes Kabelende zu crimpen ist, wobei der erste und der zweite Crimpabschnitt durch einen Hals, der die unterschiedlichen Durchmesser überbrückt, verbunden sind.

## Revendications

1. Boîtier de connecteur (2) pour connecter un câble électrique (4) à un fil conducteur, le boîtier de connecteur comprenant :
- un passage de câble (23) pourvu d'une butée intérieure (32) ;
- une bague de serrage (35) s'ajustant dans le passage de câble, la bague de serrage étant coulissante sur le câble et comprenant une portion de bague (36) et une ou plusieurs dents flexibles (37) s'étendant depuis la portion de bague dans une direction axiale ;
- une bague de verrouillage (40) pourvue d'un ou plusieurs éléments d'arrimage (41) pour mettre en prise des éléments d'arrimage correspondants (30) dans le passage de câble afin de verrouiller la bague de verrouillage dans une position de verrouillage où les dents de la bague de serrage sont pourvues d'une surface de pression biseautée vers l'extérieur (38), la portion de bague de la bague de serrage butant contre la butée intérieure dans le passage de câble, et où la bague de verrouillage (40) a un bord circonférentiel avec une surface de pression biseautée vers l'intérieur (42) butant contre la surface de pression biseautée des dents, dans laquelle la surface de pression biseautée de la bague de verrouillage presse les extrémités biseautées des dents de la bague de serrage (37) radialement vers l'intérieur lorsque la bague de verrouillage (40) est dans la position de verrouillage.

2. Boîtier de connecteur selon la revendication 1, dans lequel les éléments d'arrimage (41) de la bague de verrouillage (40) et les éléments d'arrimage correspondants (30) du passage de câble (23) forment une connexion à enclenchement rapide.

3. Boîtier de connecteur selon la revendication 2, dans lequel les éléments d'arrimage (41) de la bague de verrouillage comprennent un ou plusieurs verrous résilients à enclenchement rapide pour une coopération avec des éléments encliquetables correspondants dans le boîtier.

4. Boîtier de connecteur selon la revendication 3, dans lequel les verrous encliquetables (41) de la bague de verrouillage et/ou les éléments encliquetables correspondants (30) dans le boîtier s'étendent sur toute la périphérie de la bague de verrouillage (40) ou d'une entrée de câble (23) respectivement.

5. Boîtier de connecteur selon l'une quelconque des revendications précédentes, dans lequel la bague de serrage (35) a une circonférence en coupe non circulaire, et l'intérieur du passage de câble (23) est de forme correspondante.

6. Boîtier de connecteur selon la revendication 5, dans lequel la circonférence en coupe non circulaire est polygonale, par exemple hexagonale.

7. Boîtier de connecteur selon l'une quelconque des revendications précédentes, dans lequel la butée dans le passage de câble est au moins en partie formée par un bord d'épaulement rétrécissant le passage de câble.

8. Boîtier de connecteur selon l'une quelconque des revendications précédentes, dans lequel la butée dans le passage de câble (23) est au moins en partie formée par une bague d'étanchéité (32) reposant contre un bord rétrécissant le passage de câble (23).

9. Boîtier de connecteur selon l'une quelconque des revendications précédentes, dans lequel le connecteur comprend une première partie de boîtier (20) et une seconde partie de boîtier (21), les deux ayant une face de contact plate, où au moins l'une des deux parties de boîtier est pourvue d'une ou plusieurs protubérances (50) ayant une extrémité fixée à l'autre partie de boîtier afin de fournir une force de rétention tirant les faces de contact des deux parties du boîtier ensemble.

10. Boîtier de connecteur selon la revendication 9, dans lequel au moins l'une des deux faces de contact est au moins en partie pourvue d'un ruban adhésif double face (52).

11. Boîtier de connecteur selon la revendication 9 ou 10, dans lequel les parties de boîtier (20, 21) et les protubérances (52) sont réalisées en matière plastique et dans lequel les protubérances sont fixées à l'autre partie de boîtier par un joint soudé.

12. Module photovoltaïque (1) pourvu d'une boîte de jonction (2) comprenant un boîtier de connecteur selon l'une quelconque des revendications précédentes.

13. Module photovoltaïque selon la revendication 12, dans lequel le boîtier de connecteur loge un connecteur électroconducteur en col de cygne (3) comprenant une première extrémité (7) avec une connexion de câble et une seconde extrémité (8) avec une connexion au fil conducteur dans la feuille photovoltaïque.

14. Module photovoltaïque selon la revendication 13, dans lequel la seconde extrémité (8) du connecteur en col de cygne (3) est une connexion sertie de feuille ou une connexion avec un adhésif conducteur.

15. Module photovoltaïque selon la revendication 13 ou 14, dans lequel la première extrémité (7) comprend une connexion sertie de câble avec une première section de sertissage (9) sertie autour d'une gaine d'isolement du câble (4) et une seconde section de sertissage (10) à sertir autour d'une extrémité dénudée du câble, dans lequel les première et seconde sections de sertissage sont connectées par un col comblant la différence de diamètre.
